# EUROPEAN PATENT APPLICATION

(11) **EP 2 221 722 A1**
(43) Date of publication of application: **25.08.2010**
(21) Application number: 10154581.2
(22) Date of filing: 24.02.2010
(51) Int. Cl.: G06F 9/445, G06F 9/44

(54) **Content driven application state**

(30) Priority: 24.02.2009 GB 0903116
(71) Applicant: Promethean Limited, Blackburn Lancashire BB1 5TH (GB)
(72) Inventor: Edwardson, Andrew, Blackburn, Lancashire BB1 5TH (GB)
(74) Representative: Williams, David John

(57) **Abstract**

There is disclosed a method of creating a document using a software application, comprising the steps of: creating content for the document; determining a state of the software application for the created content; and associating the determined state of the software application with the created content.

## Description

### BACKGROUND TO THE INVENTION:

### Field of the Invention:

The invention relates to controlling of a software application in dependence on content displayed within the software application such as, for example, controlling a display of a graphical user interface or controlling a functionality of a user interface when a software application is run on a computer.

### Description of the Related Art:

It is well-known in the field of computer software that when a software application runs on a computer system, an associated display displays information for a user of the computer system. There is typically displayed content, and tools or functions of the application that plays host to the content. Typically the software application may be associated with a graphical user interface, GUI, which enables a user to interact with the software application.

For a given software application, the standard GUI typically displays tools or functions associated with all possible functionality of the application. This is a mechanism to typically allow, for example, the content of a document to be manipulated/edited. The GUI may consist of a number of icons or menu options, for example, which in turn may display further icons or sub-menus when selected. As typical software applications are associated with a wide range of functionality, a large number of options to manipulate content within the software application are available to users based on the options presented with a typical GUI.

A common problem with all reasonably complex software applications is to expose as much functionality associated with the software application as possible within the GUI, but in a way which is usable by a user of the software application. As the functionality associated with a typical software application is vast, however, a problem arises in providing a user-friendly interface which allows all functionality to be accessed.

A typical "standard" GUI provided by a software application potentially offers a complex GUI through which all functionality associated with the software application can be accessed. A typical user may only wish to access a sub-set of that functionality, and therefore for a typical user the GUI may be over-complex, and make it difficult for the user to find the specific functionality which they wish to use to manipulate content through the software application.

Typically most software applications are provided with a user interface which can be customised by a user, allowing the user to populate the GUI with their own choice of toolbars and tools. However in order for the user to obtain maximum benefit from such customisation, the user must be a reasonably sophisticated user who has knowledge of the array of functions available to enable an informed selection to be made for the customised interface.

It is also known for GUI's to exhibit some form of dynamic behaviour, whereby they offer a range of context-sensitive tools, which change depending on particular tools or objects which are selected at any one time. For example when a user highlights a drawing object within an application, the application may display a suite of drawing edit tools on the display.

Whilst providing a customisable GUI goes some way to solving these problems, this is typically a solution for users who are fully familiar with the functionality of the software application, and can therefore select their chosen functionality from the available functionality which is known to them.

However the provision of a customisable GUI may not be appropriate or useful for users who are not familiar with all the capabilities and functionality available within the software application, and also may not be suitable for users who do not have time to customise the application.

A technical problem therefore arises in that the functional options available may not be readily accessible to a user, and a user may not be able to fully utilise the application.

In the prior art it is also only possible to either allow a user access to all available functionality of an application, or to restrict all functionality (e.g. to make a document read-only).

It is therefore an aim of the present invention to provide a technique for controlling the state of a software application, such as the state of a user interface, in which one or more of the above-stated problems are addressed.

### SUMMARY OF THE INVENTION:

In one aspect the invention provides a method of creating a document using a software application, comprising the steps of: creating content for the document; determining a state of the software application for the created content; and associating the determined state of the software application with the created content.

The step of determining the state of the software application may comprise determining a state of a user interface of the software application. The step of determining the state of the software application may comprise determining a state of a function of the software application.

The step of determining the state may comprise determining a plurality of states.

The step of determining a plurality of states may include determining at least one user interface state and at least one function state. The method may further comprise the step of capturing the determined state.

The step of capturing the determined state may include saving the determined setting of the user interface and the created content together with the association therebetween.

The state of the user interface may include the display of graphical elements of the user interface.

The functionality of the user interface may be associated with the document comprising the content.

The state of the software application may be associated with a part of the created content.

The state of the software application may be associated with an object within the created content.

The step of determining and associating the state of the software application may be enabled by selecting a displayed user interface icon.

The method may further comprise the steps of displaying the created content and retrieving the appropriate state, wherein the state of the software application is adapted in accordance with the state associated with the displayed content.

The may further comprise selecting a part of the displayed content, wherein the state of the software application is adapted in accordance with the retrieved state associated with the selected part.

The selected part may be a subset of the content within the displayed content.

The selected part may be an object within the displayed content.

The invention further provides a method of modifying the state of a software application in which a document is viewed, which document is created by creating content for the document and associating a state of the software application with the created content by capturing the state of the software application in combination with the created content, the method comprising the steps of: displaying the created content; and adapting the state of the software application in dependence on the state associated with the displayed content.

The method may further comprise the step of, prior to the adapting step, retrieving the state associated with the displayed content.

The state may be a user interface state, the adapting step comprising adapting a state of the user interface of the software application.

The state may be a function state, the adapting step comprising adapting a function of the software application.

The step of displaying the created content may comprise one or more of displaying a document, displaying part of a document, or displaying an object within a document.

There is provided in an aspect a computer program comprising computer program code for performing the method steps of any one of claims 1 to 21.

There is further provided in another aspect a computer program product for storing computer program code which, when run on a computer, performs the method steps as defined.

In a further aspect the invention provides a computer system for creating a document using a software application, comprising: means for creating content for the document; means for determining a state of the software application for the created content; and means for associating the determined state of the software application with the created content.

The means for determining the state of the software application may comprise means for determining a state of a user interface of the software application.

The means for determining the state of the software application may comprise means for determining a state of a function of the software application.

In a still further aspect the invention provides a computer system for modifying the state of a software application in which a document is viewed, which document is created by creating content for the document and associating a state of the software application with the created content by capturing the state of the software application in combination with the created content, the system comprising: means for displaying the created content; and means for adapting the state of the software application in dependence on the state associated with the displayed content.

The computer system may further comprise means for retrieving the state associated with the displayed content.

In an example there is provided a dynamic, content-driven computer application. The contents of a document being viewed directly influence the available functionality and/or the presentation of that functionality for the application used to work with or view the document. The presentation of the functionality may be through a user interface.

The author of a document may direct the experience of the user of the document, to make best possible use of the content. In embodiments this is achieved by dynamically customising the user interface to expose those tools or functions which are most relevant to working with displayed content material.

Rather than the application determining the tools or functions which are relevant for display on the user interface, in accordance with embodiments of the invention the content displayed within the software application determines, at least in part, the tools or functions which are displayed or enabled.

In embodiments, a user is presented with a specially chosen set of tools or functions for a specific document or for a specific document item. The tool may be specific for the whole document, and presented with all pages, or be specific to a range of the content, such as one page of the document, several pages of the document or one or more objects within the document or page(s) of the document. The tools to be presented are preferably chosen by the author of the document, in order to explicitly direct how the user will interact with the document as a whole, page or pages of the document, or objects on the pages.

In general for a given document, the document as a whole or any part of the document may be associated with one or more instruction to control functionality or the presentation of functionality. The terms 'page' and 'object' refer to different levels of granularity within a given document. In general a document may have full content, content sub-sets, and content ranges, any of which may be associated with one or more instructions.

Upon closing the content, preferably content specific instructions may be made available, which instructions may return the functionality or presentation of the functionality back to its default settings.

### BRIEF DESCRIPTION OF THE FIGURES:

The invention will now be described by way of example with reference to the accompanying figures in which:
Figure 1 illustrates an interactive display system in which embodiments of the invention may be advantageously implemented;
Figure 2 illustrates a typical exemplary graphical user interface in the prior art;
Figure 3 illustrates an example of creation of a document in accordance with an illustrative embodiment of the invention;
Figure 4 illustrates an example of the structure of a created document in accordance with the illustrated embodiments of the invention;
Figure 5 illustrates a flow diagram for processing a document in accordance with the illustrated embodiment of the invention;
Figures 6a and 6b illustrate examples of the presentation of a user interface in accordance with the illustrated embodiment of the invention; and
Figure 7 illustrates an exemplary computer system architecture identifying the means for implementing embodiments of the invention.

### DESCRIPTION OF THE PREFERRED EMBODIMENTS:

The invention is described herein with reference to particular example implementations and applications. One skilled in the art will appreciate that the invention is not limited to the specific details of any stated implementation or application. In general the principles of the invention apply to any environment in which content of a software application is displayed, to allow a user to interact with the content. In the following user interface refers to any tool(s) or function(s) of the application that plays host to the content.

As will now be discussed, in embodiments the principles of the invention may advantageously be used in the context of a software application running on an interactive display system. However the invention is not limited in its application to such an interactive display system.

An exemplary embodiment of the invention is further discussed in the context of its application for controlling a user interface, such as a GUI. However the invention is not limited to controlling a user interface such as a GUI, as will be discussed further hereinbelow following the discussion of the preferred embodiments. In general, the invention enables the state of a software application, for example the state of a user interface, to be controlled in dependence upon the content displayed within the software application.

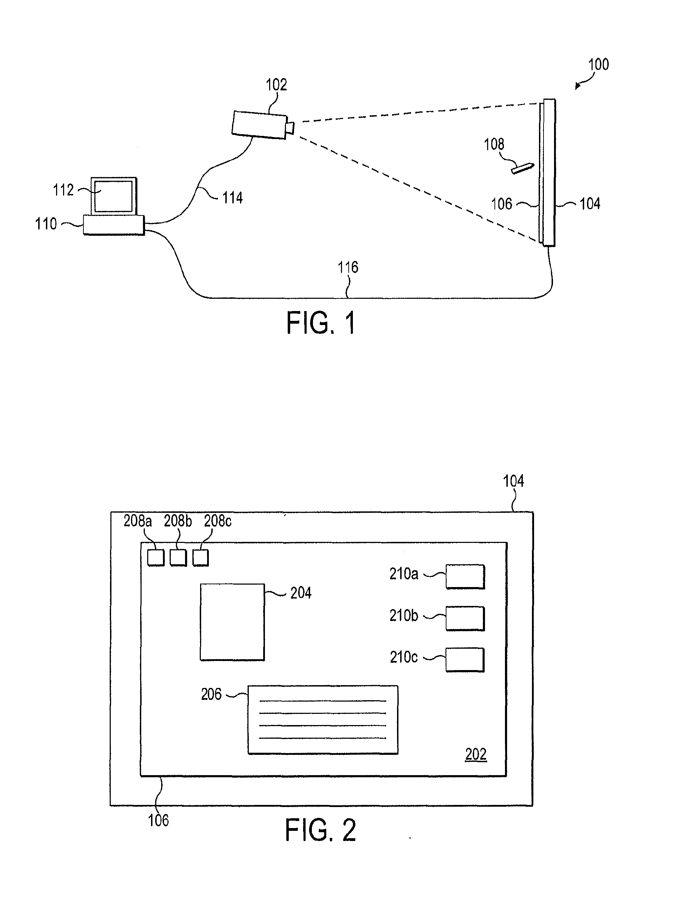

Before discussing the exemplary embodiment, an exemplary interactive display system is described with reference to Figure 1.

With reference to Figure 1, there is illustrated an exemplary interactive display system 100 within which a graphical user interface adapted in accordance with the principles of the invention may advantageously be used. The interactive display system 100 includes a projector 102, a display board 104 having a display surface 106, a pointer 108, and a computer 110 having an associated display 112. The computer 110 is connected to the projector 102 via a communication link 114, and is connected to the display device 104 by a connection 116.

The operation of interactive display systems such as that illustrated in Figure 1, and modifications thereof, are well-known to those skilled in the art. In general, the projector 102 is controlled by the computer 110 to project images onto the display surface 106. A user uses a pointer 108 to manipulate the images displayed on the display surface 106. For example the user may use the pointer 108 in the way that a mouse of a computer system is used, to move a cursor around the display surface, and to select objects displayed on the display surface. Although a pointer is illustrated in Figure 1, in alternative arrangement a user's finger may be used to manipulate images on the display surface. In general the pointer 108 may be considered a pointing means, which term encompasses a physical device or a user's finger. The interactive display surface may be a touch-sensitive surface, or any other type of interactive surface. The display device 104 is adapted to operate in combination with the computer system 110 to determine the location of the pointer 108 on the display surface 106, and to determine any actions carried out by the pointer, such as selection of an icon. The computer 110 then updates the displayed image projected through the projector 102 in dependence upon detection of action of the pointer 108.

With reference to Figure 2 there is illustrated a typical graphical user interface provided on the display surface 106 of the interactive display system 100 of Figure 1, and which may also be displayed on the display of any computer system. As illustrated the displayed image 202 includes a plurality of user interface icons 208a to 208c, and a plurality of user interface icons 210a to 210c. Also displayed is a content object 204 and a content object 206.

The displayed image will vary depending upon the application, and the way in which the application is adapted. In the arrangement of Figure 2 the plurality of user interface icons 208a to 208c may be associated with control of the application, such as to switch between pages, open a new file, save a file etc. The user interface icons 210a to 210c may allow manipulation of the displayed content. In the example shown, the content object 204 may be an image, and the content object 206 may be text. Thus the icons 210a to 210c may be associated with image manipulation options or menus, or text editing manipulation options or menus.

In practice, the user interface presented with a particular software application is generally much more complex than that illustrated in Figure 2, with a much larger array of user interface options presented. This can be by way of specific icons or menu options associated with specific functions. Icons or menu options, when selected, may display sub-menus further complicating the user interface.

For a typical user of a software application, the array of functions available on the user interface may be beyond what is needed. A typical user may only require a small subset of all available functionality displayed on the interface. Furthermore for a given set of display content, only a limited amount of functionality associated with the content may be usable. A typical user interface therefore may prevent a user of the system from fully exploiting the functionality available to manipulate the displayed content, or at least prevent such manipulation from being carried out efficiently, as the user cannot readily identify the functions available to manipulate the content.

Whilst it is known in the art for a software application to be adapted so as to display only those tools which the application deems to be relevant to a particular type of object, for example only displaying tools associated with image manipulation when an image is displayed, this may still result in the display of tool options which are unnecessary for a particular set of display content, particularly in relation to the context in which such content is to be used.

For example, interactive display systems such as that illustrated in Figure 1 are typically used for educational purposes in classroom environments. The content displayed may therefore be associated with teaching a particular subject or a particular aspect of a subject. For the purposes of teaching, there may only be a narrowly defined set of tools which are appropriate for the purposes of manipulating an object in a lesson context. Thus while a software application may identify the type of object displayed, and therefore display all possible tools associated with the manipulation of such content, this may be significantly excessive in the context in which the content is being displayed.

For example, the content object may be an image of the leaning tower of Pisa. When the image is selected, the software application may display all menu options and functions associated with image manipulation and analysis. However if this image is displayed in the context of a maths lesson, then the only required action may be to measure the dimensions of the tower and the angle of incline, and thus only a ruler and protractor are useful tools/functions. By displaying all image manipulation/analysis options, the teacher or pupils using the software application may be unclear as to the purpose, for the lesson, of the displayed image.

Therefore in accordance with the principles of the present invention, in embodiments, there is provided a technique in which the display of the user interface is dependent upon the content to be displayed, and/or the context in which the content is displayed. Preferably, as will be discussed hereinbelow, this is achieved by the author of a content document determining the user interface tools which are needed.

A further useful application of embodiments of the invention is to allow a more appropriate user interface to be displayed given the context in which a document is displayed. For example, if an author creates a text document, the author may not want a person reading the document to be able to do anything other than 'red line' the document. The author can restrict any manipulation to the document by controlling the user interface. Alternatively the author can control the manipulation of the document by leaving the user interface unchanged, but disabling the functions which are not associated with red lining. In this way the author can adapt the functionality of the software application, rather than adapt the user interface of the software application.

The author in embodiments creates a document which is capable of dynamically changing the user interface used to view the document. The appearance and layout of the user interface can be customised for the document, for each document page or for individual items or objects in the document or document pages, in dependence upon the content of the document. Authoring tools make it possible to embed such instructions within the document, which can be processed when the document is processed for viewing.

Whilst the embodiments described herein relate to the provision of the content-driven user interface being dependent upon the author determining instructions when authoring the document, it is envisaged that in alternative arrangements a dynamic, automatic technique may be provided in a software application, which is capable of identifying a type of content in a particular context, and thereby automatically adapting the user interface. However for the purposes of explanation in the present description it is assumed that the adaptation of the user interface is dependent upon instructions contained in an authored document in which the content is based and the context understood by the author.

For the purposes of the an example embodiment, it is assumed that the authored document is created using a hierarchical file structure. However any file structure for the creation of a content document may be adapted to implement the invention. Examples of hierarchical file structures are extensible mark-up language (XML) and cascading style sheets (CSS).

The hierarchical file structure is preferably adapted to include a definition of instructions, which instructions determine control of the user interface when the document is displayed. In the exemplary embodiment, when running a software application a default user interface will be displayed, and the instructions embedded within an authored document in accordance with the principles of this invention are instructions to adapt the default user interface, e.g. by adding or removing options to or from the user interface, or by creating a new user interface.

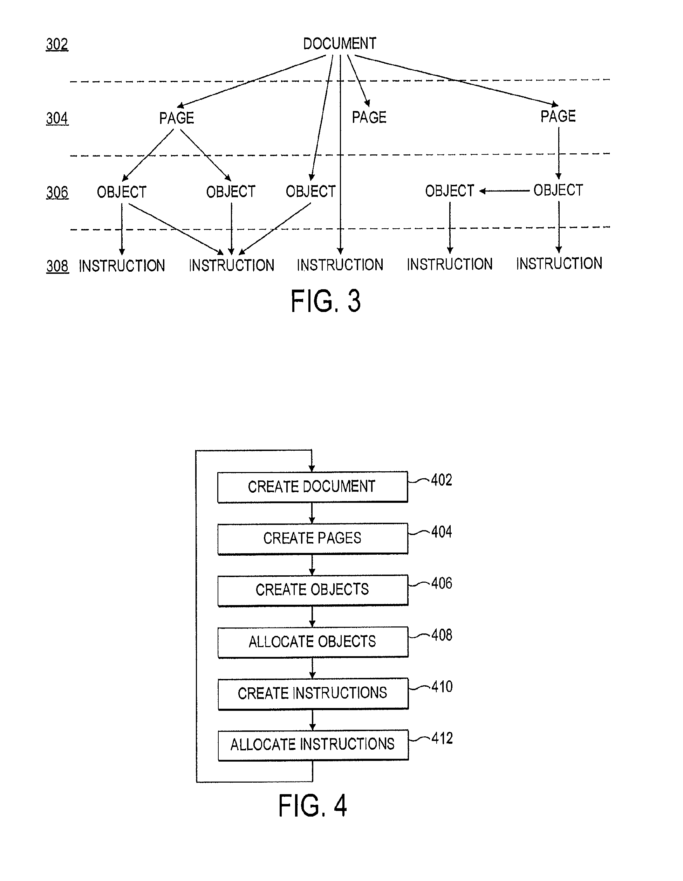

With reference to Figure 3, there is illustrated the format of an exemplary hierarchical data structure in an exemplary embodiment of the invention. As can be seen in Figure 3, the hierarchical data structure has three levels. The highest level, level 1, identifies the content document itself, as denoted by reference numeral 302. The second level, as denoted by reference numeral 304, identifies the pages within the document. The third level, as denoted by reference numeral 306, identifies the objects within the document or pages. An object may be associated with the document or one or more pages within the document. An object may be inside another object. A fourth level, in accordance with the invention, is an instruction level, and is denoted by reference numeral 308. An instruction may be associated with the document, one or more pages of the document, or one or more objects.

With reference to Figure 4, there is illustrated a high level flow of the method steps involved in creating or authoring a document for a software application in accordance with an exemplary embodiment of the invention.

As illustrated in Figure 4, in a step 402 a document author creates a document. In successive steps 404 and 406 the document author creates pages and creates objects. In a step 408 the document author allocates objects. Objects may be allocated to the document itself, to one or more pages of the document, or to other objects.

In a step 410, in accordance with the invention, the document author creates instructions. These instructions are instructions for controlling the state of the user interface. The instructions may be instructions to display certain icons or menu options on the user interface, or to inhibit the display of certain icons or menu options on the user interface. In embodiments, it may be considered that the instructions are instructions to vary the user interface from its default condition. In other embodiments, the instructions may be instructions to create a new user interface. In further embodiments, the instructions may be instructions to adapt the existing user interface state.

In a step 412, the document author allocates the created instructions. Thus any given instruction is allocated to a document, page or object in any combination.

Whilst the above describes an arrangement in which an author can create a set of instructions to control the state of the user interface, in practice these instructions are preferably created by the author adapting or customising the user interface with the document content selected. Once the user interface adaptation is complete, the author can select a function, e.g. by selecting a displayed icon in edit mode, and the current state of the user interface is captured and stored with an association to the selected content. In this way the generation of the instruction is automated and does not require programming skills.

The method flow of Figure 4 results in the creation of a document with the hierarchical structure of Figure 3. It should be noted that the steps of Figure 4 need not be followed in the sequence shown. Thus for example in Figure 4 it is shown that all pages are created, then all objects created, then all instructions created. In practice, a page may be created, then objects created for that page, and then instructions created for the page including the objects on the page. One skilled in the art will appreciate the way in which instructions can be created and allocated to the document during its authoring process, by capturing the state of the use interface at any instant in association with selection of the document content.

Again it should also be understood that the invention is not limited to a particular document structure as described with reference to Figures 3 and 4. One skilled in the art will appreciate that in accordance with embodiments of the invention there is simply a requirement that a state of the user interface may be captured and associated with the content of a document. When such content is displayed or selected during document viewing, the captured associated state is retrieved and applied to the user interface. The state may require specific user interface elements to be displayed, to cause specific user interface elements to be inhibited, or to vary existing user interface elements.

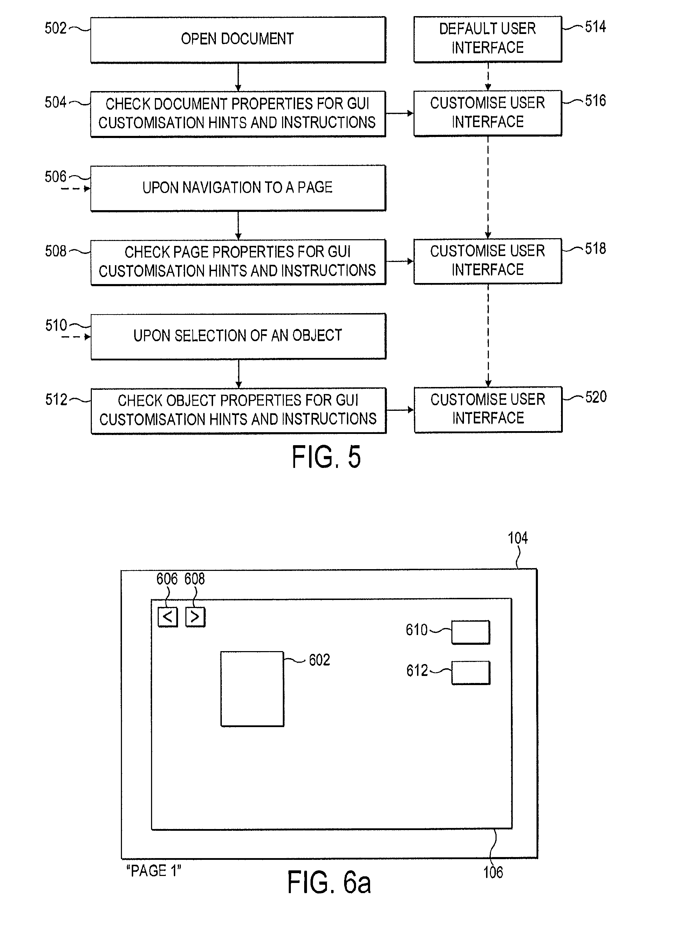

The processing of a document in accordance with the exemplary embodiment of the invention is now described with reference to Figure 5.

As illustrated in Figure 5, in a step 502 a software application running on the computer system opens or accesses the document. As denoted by step 514, prior to opening of the document, and on initial opening of the document, a default user interface is displayed. Such default user interface is typically determined by the software application itself.

In a step 504, the software application running on the computer system checks the document properties for user interface customisation hints and instructions. In dependence upon such hints and instructions being present, in a step 516, the user interface is customised by the software application itself.

It should be noted that in step 504 reference is made to user interface customisation hints and instructions. As noted hereinabove, instructions are preferably instructions for controlling the user interface. In an alternative, or in addition to the instructions, hints may be provided which can be used by the software application hosting the document for customising the user interface. These hints may comprise preferred settings, rather than instructions, which the software application can act on if the software application is suitably adapted to enable such preferred settings.

Thus in retrieving the captured associated state for the content, certain state information may not be applied. This may be the case, for example, where a document is opened or accessed using an earlier version of the software application than with which it was created.

As denoted by step 506, upon navigation to a particular page of the open document, in a step 508 the page properties are checked for user interface customisation hints and instructions. As such, in a step 518 the user interface may be further modified or customised in accordance with a captioned associated state.

As denoted by step 510, upon selection of an object, whether generally within the document or within a specific page or within a specific object, in a step 512 there is a check carried out for object properties for user interface customisation hints and instructions, and then if necessary further customisation of the user interface takes place by the software application in a step 520 in accordance with a captured associated state.

Preferably if a conflict arises between two sets of instructions or states, then the most recent instruction or state takes precedence. Alternative techniques for dealing with conflict resolution may be provided.

On closing of a document the default user interface state is preferably reinstated. The default user interface may also be reinstated if an object is closed, or a page of the document is closed (by for example turning to a new page) without any specific customised states being present for the new object or page.

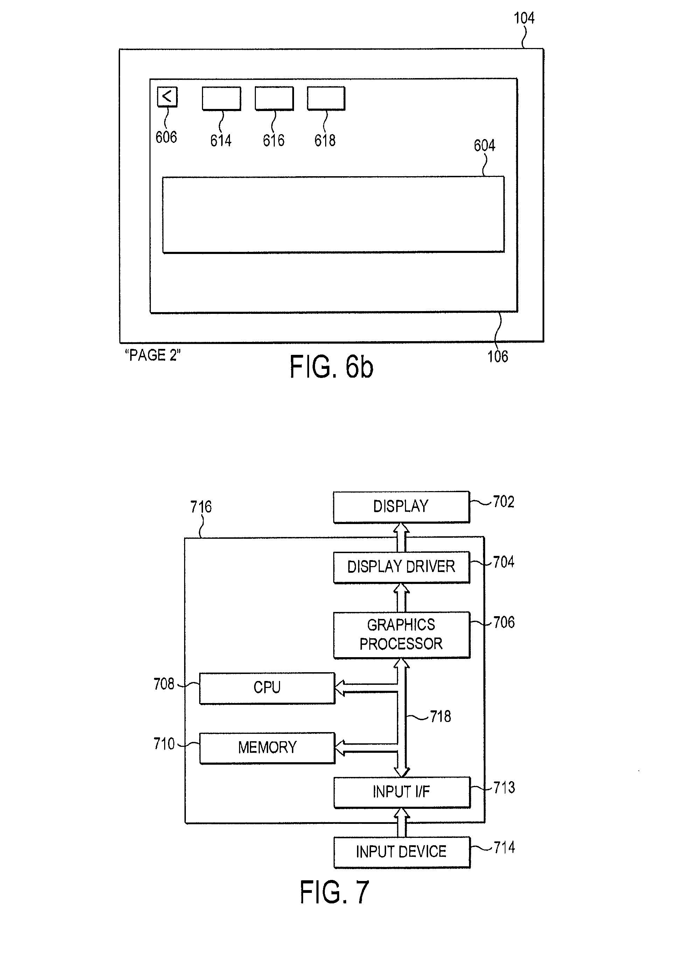

With reference to Figure 6a and 6b, there is now illustrated the modification of the user interface for a software application on display of a given document, in accordance with an exemplary embodiment.

As illustrated in Figure 6a, on the display surface 106 there is illustrated a content object 602 such as a text object. Toward the top left corner of the display there is illustrated two icons 606 and 608, being icons associated with a "page backwards" and "page forward" operation respectively. In addition two further icons 610 and 612 are presented on the user interface towards the right-hand side of the display. The icons 610 and 612 may be associated with functions for editing the type of object 602, and more specifically functions which the author of the document has determined will be displayed for the purposes of editing.

A user selects the graphical icon 608 to move on to the next page. The next page is illustrated in Figure 6b. As seen in Figure 6b, the next page includes a content object 604, such as an image. There is displayed on the display the "previous page" icon 606, but not the "next page" icon. Thus the user interface is controlled such that the user can only select to move back to the previous page, and cannot move forward to another page. In addition three icons 614, 616 and 618 are displayed towards the top of the display, being icons representing functions which may be used to edit the displayed object 604. The functions associated with the icons 614, 616, 618 are chosen by the author of the document to be displayed for the purpose of this page.

One skilled in the art will thus appreciate that in the described exemplary embodiments the invention provides for the user interface presented to a user when a document is being displayed in a software application to be customised. Preferably the user interface is customised so that only the options associated with the particular object displayed are presented to the user, and the user is not presented with options which are not applicable to the current content. In a preferred embodiment, the options displayed on the user interface are associated with the context of the application, and thus the user options may not be all possible options for editing or viewing the type of content displayed, but may be limited to the context in which the content is displayed. This can be particularly understood by the example given above, where the context is that of an educational software application, where only the user interface icons associated with the context of a particular lesson are displayed.

The invention has been described herein by way of exemplary embodiments.

In the described exemplary embodiments, instructions associated with the document are used in order to manipulate a user interface presented by a software application to a user. The invention is not limited, however, to the manipulation of a user interface. In general, the instructions associated with the content of a document may be used to control the state of the software application with which the document is viewed. This state may be the user interface provided by the software application, or may be other functionality. An example of other functionality which may be controlled is the behaviour of the software application responsive to a user input. Such state may not be visible to the user, and therefore has no impact on the user interface displayed. An example of a modification to functionality may be to prevent the saving of data responsive to a user selecting a save option.

An instruction associated with content may be a programmatic instruction, for example an instruction to add, remove or modify the behaviour of the application containing the content.

Exemplary embodiments are also described in the context of a document including pages and objects. This exemplary embodiment leans towards an example where a document is a text document including embedded objects. The invention is not limited, however, to a document or content which may be considered to comprise pages and objects. In general, the invention is applicable to any content or sub-set of content displayed using a software application, and instructions for manipulating the state of the software application may be associated with the whole content, one or more parts of the content (sub-content), or continuous or discontinuous ranges of content.

With reference to Figure 7, there is illustrated an exemplary computer system architecture including means for implementing embodiments of the invention. The computer system is generally designated by reference numeral 716. The computer system includes a central processor unit (CPU) 708, a memory 710, a graphics processor 706, a display driver 704, and an input interface 712. The graphics processor 706, CPU 708, memory 710, and input interface 712 are interconnected via an interface bus 718. The graphics processor 706 connects to the display driver 704 via a graphics bus 720. The display driver 704 is connected to a display 702 associated with the computer system via an interface 722. The input interface 712 receives input signals on an interface 724 from an input device (or devices) 714.

The display 702 may be integrated with the computer system or be external to the computer system. The display 702 may be, for example, a display of an interactive display system. The input device 714 may be integrated with the computer system or external thereto. The input device 714 may be a pointing device associated with an interactive display surface.

In other exemplary arrangements, the display 702 may be an integrated display of a personal data assistant (PDA) device or other form of portable computer system. The input device 714 may be an integrated keypad of a PDA, a keyboard associated with a computer system, or a touch surface. One skilled in the art will appreciate the possible options for providing inputs to different types of computer system, and for displaying data from different types of computer system.

The methods described hereinabove may be implemented on computer software running on a computer system. The invention may therefore be embodied as computer program code being executed under the control of a processor of a computer system. The computer program code may be stored on a computer program product. A computer program product may include a computer memory, a portable disk, portable storage memory, or hard disk memory.

The invention has been described herein by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. A method of creating a user document for a software application, comprising the steps of:
creating user content for the user document;
customising a configured state of the software application for the created user content;
associating the customisation of the configured state of the software application with the created user content;
and
saving the customisation of the configured state of the software application and the created user content together with the association therebetween.

2. The method of claim 1 wherein the step of customising the configured state of the software application comprises customising a configured state of a user interface of the software application.

3. The method of claim 1 or claim 2 wherein the step of customising the configured state of the software application comprises customising a configured state of a function of the software application.

4. The method of any one of claims 1 to 3 wherein the step of customising the configured state comprises customising a plurality of configured states.

5. The method of claim 4 when dependent on claims 2 and 3 wherein the step of customising a plurality of configured states includes customising at least one user interface configured state and at least one function configured state.

6. The method of any one of claims 1 to 7 wherein the state of the software application is associated with a part of the created user content.

7. The method of any one of claims 1 to 7 wherein the state of the software application is associated with an object within the created user content.

8. The method of any one of claims 1 to 9 wherein the step of customising and associating the customisation of the configured state of the software application is enabled by selecting a displayed user interface icon.

9. A method of modifying the state of a software application in which a user document is viewed, which user document is created by creating user content for the user document and associating a customisation of a configured state of the software application with the created content by capturing the customisation of the configured state of the software application in combination with the created user content, the method comprising the steps of:
displaying the created user content; and
adapting the state of the software application in dependence on the customisation of the configured state associated with the displayed user content.

10. The method of claim 15 further comprising the step of, prior to the adapting step, retrieving the customisation of the configured state associated with the displayed user content.

11. The method of any one of claims 15 to 18 wherein the step of displaying the created user content comprises one or more of displaying a user document, displaying part of a user document, or displaying an object within a user document.

12. A computer program comprising computer program code for performing the method steps of any one of claims 1 to 19.

13. A computer program product for storing computer program code which, when run on a computer, performs the method steps of any one of claims 1 to 19.

14. A computer system for creating a user document for a software application, comprising:
means for creating user content for the user document;
means for customising a configured state of the software application for the created user content;
means for associating the customisation of the configured state of the software application with the created content; and
means for saving the customisation of the configured state of the software application and the created user content together with the association there between.

15. A computer system for modifying the state of a software application in which a user document is viewed, which user document is created by creating user content for the user document and associating a state of the software application with the created user content by capturing customisation of a configured state of the software application in combination with the created user content, the system comprising:
means for displaying the created user content; and
means for adapting a configured state of the software application in dependence on the customisation of the configured state associated with the displayed user content.
